# EUROPÄISCHE PATENTSCHRIFT

(11) **EP 0 496 907 B1**
(45) Veröffentlichungstag und Bekanntmachung des Hinweises auf die Patenterteilung: **06.04.1994**
(21) Anmeldenummer: 91101065.0
(22) Anmeldetag: 28.01.1991
(51) Int. Cl.: B61F 5/38, B61F 3/16, B61F 5/44, B62D 1/26

(54) **Einzelrad-Steuervorrichtung**
Single wheel steering device
Dispositif d'orientation pour roue libre

(43) Veröffentlichungstag der Anmeldung: 05.08.1992
(73) Patentinhaber: SIEMENS AKTIENGESELLSCHAFT, 80333 München (DE)
(72) Erfinder: Girod, Hansjochen, W-4330 Mülheim/Ruhr (DE); Korn, Gerhard, W-4330 Mülheim/Ruhr (DE); Scheucken, Heinrich, Dipl.-Ing., W-4330 Mülheim/Ruhr (DE)

(56) Entgegenhaltungen:
- DE-C- 3 635 804
- FR-A- 2 294 074

## Beschreibung

Die Erfindung bezieht sich auf eine Einzelrad-Steuervorrichtung für wenigstens ein horizontal drehbewegliches Einzelrad eines Fahrzeuges, insbesondere Schienenfahrzeuges.

Eine derartige Einzelrad-Steuervorrichtung ist in der europäischen Patentanmeldung 90114094.7 vorgeschlagen worden. Diese Einzelrad-Steuervorrichtung umfaßt eine Richtungsvorgabe-Einrichtung, die einen in einem Strömungskanal angeordneten Strömungskörper aufweist. Bei einer derartigen Einzelrad-Steuervorrichtung ist eine besonders gute Stabilisierung des Strömungsverlaufs wünschenswert.

Aufgabe der vorliegenden Erfindung ist es, eine Einzelrad-Steuervorrichtung der eingangs genannten Art zu schaffen, die eine nochmals verbesserte Stabilisierung des Strömungsverlaufs aufweist.

Die Aufgabe wird erfindungsgemäß durch die Merkmale des Anspruchs 1 gelöst. Vorteilhafte Ausgestaltungen der Erfindung sind in den Ansprüchen 2 bis 24 beschrieben.

Die erfindungsgemäße Einzelrad-Steuervorrichtung bietet die Möglichkeit, bei steigender Fahrzeuggeschwindigkeit die Geschwindigkeit des strömenden Mediums im Strömungskanal zu erhöhen bzw. bei sinkender Fahrzeuggeschwindigkeit die Strömungsgeschwindigkeit zu verringern. Selbst bei extrem geringer Geschwindigkeit des strömenden Mediums ist durch das im Strömungskanal angeordnete Strömungsrohr eine gute Stabilisierung des Strömungsverlaufs gewährleistet. Damit erhält man nicht nur bei hohen Fahrzeuggeschwindigkeiten, sondern auch beim Durchfahren von engen Gleisbögen, die nur geringe Fahrzeuggeschwindigkeiten zulassen, einen verbesserten Wagenlauf. Darüber hinaus werden der Rad-Schiene-Verschleiß und die Fahrgeräuschentwicklung wesentlich herabgesetzt.

Die Verwendung einer Richtungsvorgabe-Einrichtung gemäß den Merkmalen des Anspruchs 1 erzeugt Richtungs- und Steuerkräfte, die sich aus den Radlaufebenen ableiten und die gegebenenfalls für die Steuerung weiterer Einzelräder verarbeitet werden können. Zum Aufbau eines Richtungsfeldes ist ein strömendes Medium erforderlich. Der Begriff strömendes Medium umfaßt hierbei sowohl Gase als auch vorzugsweise Flüssigkeiten.

Bei einer Einzelrad-Steuervorrichtung gemäß Anspruch 7 ist die Richtungsvorgabe-Einrichtung als Freistrahlregler ausgebildet. Für horizontal drehbewegliche Einzelradanordnungen, die höhere Lenkkräfte erfordern, wie z.B. höhere Raddrücke oder Abweichungen des Radaufstandspunktes vom Lenkdrehpunkt, kann gemäß Anspruch 18 in vorteilhafter Weise eine Stellkraftverstärkung mittels eines zusätzlichen Druckkreislaufs und eine Regelung mittels eines Proportionalventils vorgesehen sein. Ohne Druckverstärkung mittels eines Druck-Hauptkreises wären drei Druckkreisumläufe pro Radpaar erforderlich.

Durch eine Einzelrad-Steuervorrichtung gemäß Anspruch 12, bei der ein Druckstrahlregler als Richtungsvorgabe-Einrichtung vorgesehen ist, erhält man gegenüber Freistrahlreglern mit Druckverstärkung eine weitere Stellkraftverstärkung. Bei Verwendung eines Druckstrahlreglers wird die Steuerung des horizontal drehbeweglichen Einzelrades in eine Regelung bei Geradeaus-Lauf und eine Regelung bei Kurven-Lauf unterteilt.

Eine besonders gute Geradeaus-Stabilisierung der Einzelräder eines Fahrzeuges erhält man bei einer Einzelrad-Steuervorrichtung gemäß Anspruch 20.

Weitere Vorteile und Einzelheiten der Erfindung ergeben sich aus der nachfolgenden Beschreibung von Ausführungsbeispielen anhand der Zeichnung und in Verbindung mit den Ansprüchen 2 bis 24. Es zeigen:
- FIG 1: ein Prinzip-Schaltbild einer als Freistrahlregler ausgebildeten Richtungsvorgabe-Einrichtung der erfindungsgemäßen Einzelrad-Steuervorrichtung,
- FIG 2: einen Freistrahlregler mit einer Druckverstärkung,
- FIG 3: eine als Druckstrahlregler ausgebildete Richtungsvorgabe-Einrichtung,
- FIG 4,5: eine Strahlteilerwippe des Druckstrahlreglers gemäß FIG 3.

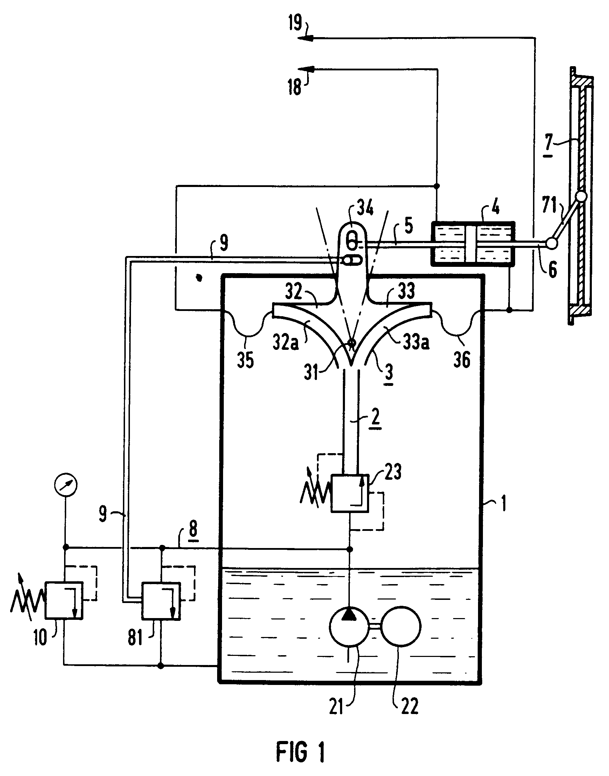

In FIG 1 ist mit 1 ein Behälter für ein strömendes Medium bezeichnet, in dem ein Strömungsrohr 2 angeordnet ist, aus dem das strömende Medium, vorzugsweise Flüssigkeit, austritt. Die Strömung der Flüssigkeit wird durch eine im Strömungsrohr 2 angeordnete Förderpumpe 21 erzeugt, die von einem Motor 22 angetrieben wird. Im Strömungsrohr 2 ist ferner ein Druckregelventil 23 vorgesehen, durch das der Druck der austretenden Flüssigkeit regelbar ist. Im Behälter 1 ist weiterhin eine Strömungsteilerwippe 3 um eine vertikale Drehachse 31 horizontal schwenkbar angeordnet. In der Strömungsteilerwippe 3 wird der aus dem Strömungsrohr 2 austretende Flüssigkeitsstrom aufgeteilt. Die Strömungsteilerwippe 3 weist hierzu zwei schaufelförmige, einseitig offene Strahlumlenkkörper 32a,33a auf, die zueinander und zur Drehachse 31 symmetrisch angeordnet sind und vor der Austrittsöffnung des Strömungsrohres 2 liegen. Durch die Aufteilung des freistrahlenden Flüssigkeitsstroms in den beiden schaufelförmigen Strahlumlenkkörpern 32a,33a entstehen, bezogen auf den durch die horizontale Drehachse 31 definierten Wippendrehpunkt, gegeneinander wirkende Kräfte, deren Größe sich nach den Strömungsanteilen und deren Ablenkwinkel richten. Durch die gegen die Strömung gerichtete Wippenlage entsteht ein labiles Gleichgewicht.

Gemäß FIG 1 wird über einen aus dem Behälter 1 herausgeführten Wippenhebel 34 die Stellung der Strömungsteilerwippe 3 auf einen außerhalb des Behälters 1 liegenden hydraulischen Arbeitszylinder 4 und auf den in FIG 1 nicht dargestellten Arbeitszylinder des zweiten Einzelrades eines Radpaares übertragen (Pfeile 18,19). Der Wippenhebel 34 weist hierzu eine Kulissenführung auf, in der ein mit dem Arbeitszylinder 4 verbundenes Kopplungselement 5 geführt ist. Gleichzeitig werden die in den schaufelförmigen Strahlumlenkkörpern 32a und 33a entstehenden unterschiedlichen Staudrücke über flexible Schlauchanschlüsse 35,36 dem Arbeitszylinder 4 in der Weise zugeführt, daß sie der am Wippenhebel 34 auftretenden Differenzkraft entgegenwirkt. Hierdurch entsteht eine Nullstellung-Stabilisierung des Kräftespiels zwischen Wippenlage und Staudruckänderung. Diese Zentrierkraft wird über ein Verbindungsgestänge 6 vom Arbeitszylinder 4 auf einen Lenkhebel 71 eines Einzelrades 7 übertragen. Damit erhält man eine Geradeaus-Stabilisierung des Einzelrades 7.

Wird die Strömungsteilerwippe 3 durch eine äußere Kraft, z.B. durch die Spurführungsanlaufkraft beim Kurvenein- und Kurvendurchlauf, über eine konstruktiv vorgegebene Toleranz hinaus ausgelenkt, muß diese die Geradeaus-Stabilisierung der Richtungsvorgabeeinrichtung überwinden, wodurch ein Spurführungsgegendruck entsteht. Dann wird über ein Dreiwegeventil 81 ein Druck-Nebenschlußkreis 8 an das Strömungsrohr 2 geschaltet, wodurch der Strahldruck im Strömungsrohr 2 herabgesetzt wird. Der verringerte Strahldruck führt zu einer Absenkung des Spurführungsgegendrucks und damit zu einer verbesserten Kurvenführung des Rades. Die Aktivierung des Dreiwegeventils 81 erfolgt in vorteilhafter Weise durch ein Gestänge 9, daß wiederum über eine Kulissenführung im Wippenhebel 34 geführt ist.

Parallel zum Druck-Nebenschlußkreis ist ein Druckbegrenzungsventil 10 angeordnet, das die Einzelrad-Steuervorrichtung vor unzulässigem Überdruck schützt.

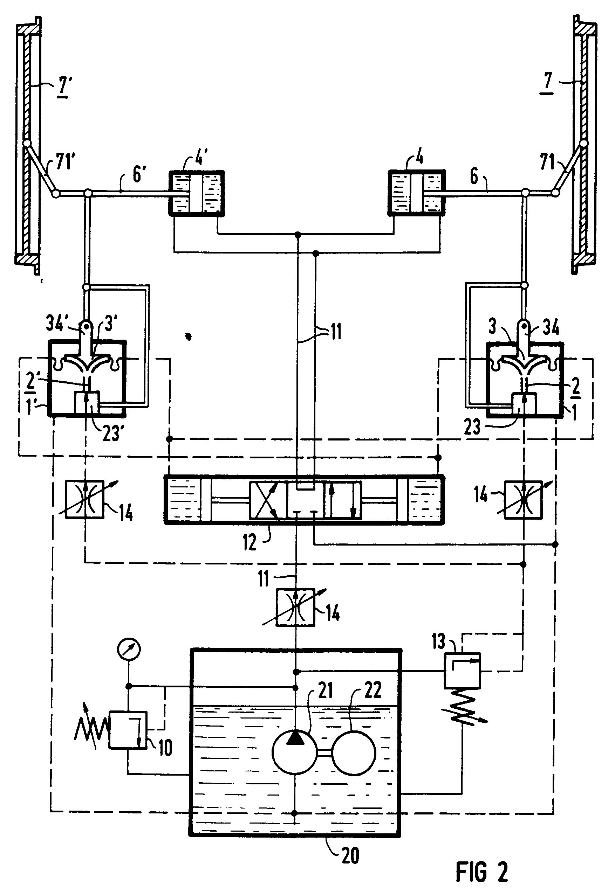

In FIG 2 ist eine Druckverstärkung bei einem Freistrahlregler durch einen Druck-Hauptkreis 11 dargestellt. Die Komponenten der zugeordneten Einzelrad-Steuervorrichtung, die mit denen in FIG 1 übereinstimmen, weisen die gleichen Bezugszeichen auf. Die entsprechenden Komponenten der Einzelrad-Steuervorrichtung des zweiten Einzelrades erhalten die gleichen Bezugsziffern, wie die Komponenten der Einzelrad-Steuervorrichtung für das erste Einzelrad; sie sind jedoch zur Unterscheidung durch eine Strichsignierung gekennzeichnet.

Der zur Druckverstärkung dienende Druck-Hauptkreis 11, in dem die Förderpumpe 21 angeordnet ist, wird von einem Rücklaufbehälter 20 mit dem strömenden Medium versorgt und ist über ein Proportionalventil 12 an die parallel zueinanderliegenden Arbeitszylinder 4 und 4' geschaltet. Durch das Proportionalventil 12 wird der auf die Arbeitszylinder 4 und 4' gegebene Druck geregelt. Die Regelung des Druckes erfolgt durch die Einzelrad-Steuervorrichtungen der beiden Einzelräder 7 und 7'. Die Staudruckabgänge an den Behältern 1 und 1' sind hierzu mit den Steuereingängen des Proportionalventils 12 verbunden. Bei der in FIG 2 dargestellten Geradeaus-Stellung der beiden Einzelräder 7 und 7' sind die Strömungsteilerwippen 3 und 3' nicht ausgelenkt und an den Staudruckabgängen der Behälter 1 und 1' tritt kein Differenzdruck auf. Bei Einlauf in einen Gleisbogen wird über das kurvenäußere (anlaufende) Einzelrad (z.B. das Einzelrad 7) ein Differenzdruck auf die Steuereingänge des Proportionalventils 12 gegeben, wodurch der Arbeitszylinder 4 des kurvenäußeren Einzelrades 7 mit Druck beaufschlagt wird, der gegen die Anlaufkraft arbeitet und gleichzeitig im Arbeitszylinder 4' des kurveninneren Einzelrades 7' im Sinne einer Stellkraftverstärkung der Druck erhöht wird.

Bei Auslauf aus dem Gleisbogen stellt der Gegendruck im Arbeitszylinder 4 das kurvenaußenseitige Rad wieder in die Geradeausrichtung und ändert damit den auf die Steuereingänge des Proportionalventils 12 gegebenen Differenzdruck. Das kurveninnenseitig laufende Rad wird infolge des Druckabfalls im Arbeitszylinder 4' von seiner Richtungsvorgabe-Einrichtung erfaßt und ebenfalls geradeaus gestellt.

Zur Versorgung der Druckkreisläufe für die Richtungsvorgabe-Einrichtungen der Räder 7,7' werden diese über ein Druckminderventil 13 aus dem Druck-Hauptkreis 11 beaufschlagt. Zur gleichmäßigen Beaufschlagung des Proportionalventils 12 sowie der beiden Richtungsvorgabe-Einrichtungen sind sowohl in den Druckkreisläufen der beiden Richtungsvorgabe-Einrichtungen als auch im Druck-Hauptkreis Stromventile 14 vorgesehen.

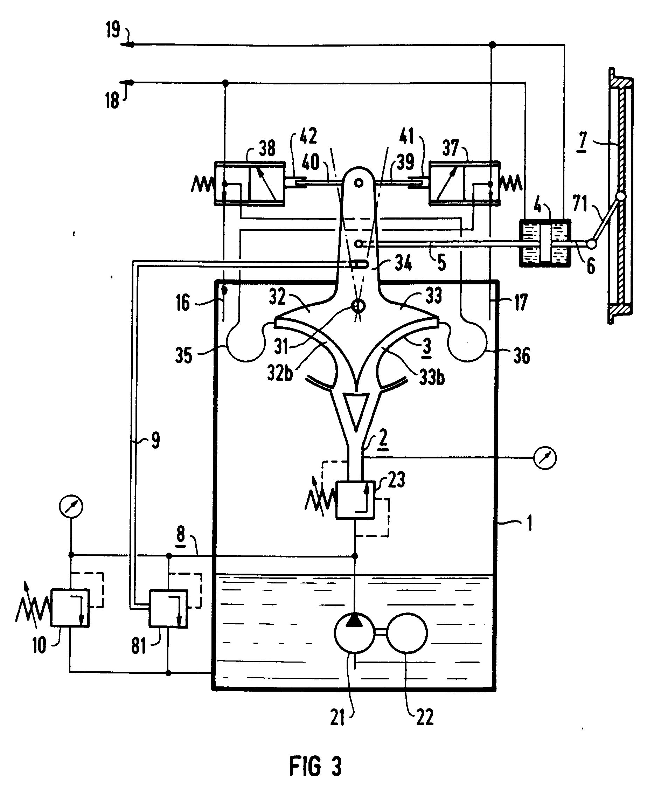

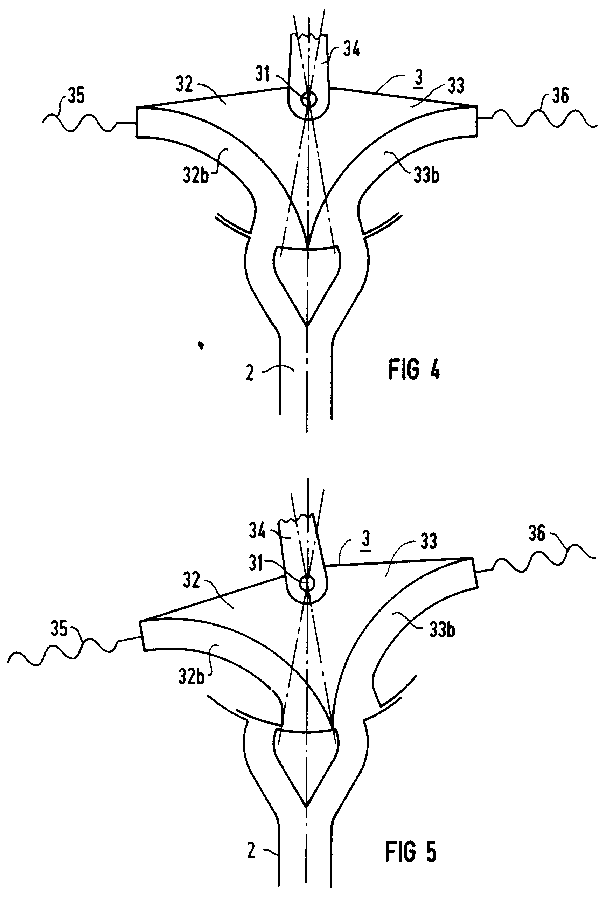

Bei der Einzelrad-Steuervorrichtung gemäß FIG 3 ist die Richtungsvorgabe-Einrichtung als Druckstrahlregler ausgebildet. Er besteht im wesentlichen aus einem als Hosenrohr ausgebildeten Strahlrohr 2 und einer in Reihe zu diesem angeordneten Strömungsteilerwippe 3. In der Strömungsteilerwippe 3 sind zwei schaufelförmige Strahlumlenkrohre 32b und 33b zueinander sowie zur Drehachse 31 symmetrisch angeordnet. Die schaufelförmigen Strahlumlenkrohre 32b,33b liegen mit ihren Eintrittsöffnungen an den Austrittsöffnungen des Hosenrohrs 2 an. Die Strahlumlenkrohre 32b und 33b sind ferner über flexible Schlauchanschlüsse 35 und 36 mit zwei Wegeventilen 37 und 38 verbunden, die das aufgeteilte und abgelenkte Strömungsmedium während der Geradeaus-Stellung des Einzelrades 7 über Rückführleitungen 16 und 17 in den Behälter 1 zurückführen. Durch die Umlaufströmung werden in den symmetrischen Strahlumlenkrohren 32b und 33b, bezogen auf den Wippendrehpunkt, gegeneinander gerichtete Momente erzeugt. Durch die Drehschieberfunktion von Strömungsteilerwippe 3 und Hosenrohr 2 werden die Teilströme bei Auslenkung der Strömungsteilerwippe 3 jeweils auf der der Wippenauslenkung gegenüberliegenden Seite des Hosenrohrs 2 gedrosselt. Dabei bleibt der Durchflußquerschnitt auf der ausgelenkten Seite erhalten (FIG 5). Dies wird konstruktiv dadurch erreicht, daß die schaufelförmigen Strahlumlenkrohre Eintrittsöffnungen aufweisen, die etwa dem doppelten Querschnitt der Austritts-Öffnungen das Hosenrohrs 2 entsprechen (FIG 4). Die im Querschnittübergang auftretenden Wirbel führen eine Ablösung der Strömung von der Wand herbei und lassen die Flüssigkeit als Freistrahl auf die Innenseite der schaufelförmigen Strahlumlenkrohre 32b und 33b prallen.

Bei entgegengesetzter Stellung der Strömungsteilerwippe 3 kehren sich die Verhältnisse um. Dadurch wird eine strömungshydraulische Nullpunktregelung erreicht. Diese wird als Geradeaus-Stabilisierung für das horizontal bewegliche Einzelrad 7 benutzt.

Bei Einfahrt in eine Gleiskurve werden auf die Fahrzeugeinheiten über die tangentiale Radstellung des ersten Radpaares (in FIG 3 ist nur die Steuervorrichtung für ein Einzelrad dargestellt) Seitenkräfte (Anlaufkräfte) von den Lenkhebeln 71 auf die Wippenhebel 34 der Druckstrahlregler sowie auf die Arbeitszylinder 4 übertragen. Die Wippenhebel und Arbeitszylinder des zweiten, in FIG 3 nicht dargestellten Radpaares werden durch die Einschwenkung der Fahrzeugeinheit in den Kurvenlauf mit rückwirkenden Stellkräften beaufschlagt, die das kurvenaußenseitige Einzelrad hinter dem Radaufstandspunkt solange anlaufen läßt, bis der Spurkranzdruckpunkt dieses Einzelrades ebenfalls den Kurvenanfang erreicht hat. Es stellt sich dann in die Kurventangentiale ein, wobei es das kurveninnenseitige Einzelrad über die hydraulische Spurstange mitsteuert. Beim Ablauf dieser Vorgänge werden nur die mit den Wippenhebeln 34 durch Betätigungsgestänge 39 und 40 verbundenen Wegeventile 37 und 38 geschlossen, die in Richtung der Komponenten der Anlaufkraft wirken. Sie drosseln den Umlaufstrom und öffnen die Druckleitungen zu den Arbeitszylindern 4. In diesen werden proportional zu den Auslenkwinkeln der Wippenhebel 34 und des Drehschieberübergangs am Hosenrohr 2 entsprechende Druckpotentiale in den Strahlumlenkrohren 32 und 33 der Strömungsteilerwippe 3 eingestellt, die gegen die Anlaufkräfte gerichtet sind. Infolge der selbsttätigen und sofort einsetzenden Strahldruckminderung durch das Dreiwegeventil 81 wird der Strahldruck auf ein Minimum herabgeregelt.

Die vorstehend beschriebene Gegenkraftsteuerung wurde deshalb gewählt, um bei Minderung oder Wegfall der Anlaufkraft bzw. bei Rücklauf des Stellwinkels zwischen Radlaufebene und Fahrzeuglängsachse eine selbsttätige Rückführung in die Nullstellung zu erreichen. Damit für die Vor- und Rückwärtsfahrt die entsprechenden Winkeleinstellungen zwischen Fahrzeuglängsachse und Strömungsteilerwippe 3 in die erforderlichen Auslenkrichtungen wirksam werden, müssen die Lenkhebel 71 spiegelbildlich zu der Radpaarabstandsmitte angeordnet sein.

Nach Erreichen der Nullstellung wird im Wegeventil 37 bzw.38 die Umlaufströmung geöffnet, so daß die Nullstellung-Stabilisierung wieder voll wirksam wird.

Die zweistufige hydraulische Arbeitsweise von Nullpunkt-Stabilisierung und Kurvenanlaufsteuerung der Druckstrahlregler setzt voraus, daß die Wegeventile durch die Wippenhebel der Strahlteiler nur jeweils in Richtung der Radauslenkungen bzw. der relativen Wagenkastenverdrehung gegenüber der vorhergehenden Radebenenstellung betätigt werden. Dies wird dadurch erreicht, daß die Betätigungsgestänge 39 und 40 mittels Teleskopführungen 41 und 42 an die Wegeventile 37 bzw.38 gekoppelt sind. Damit ist nur in einer Richtung des Wippenhebels 34 die Betätigung der Wegeventile 37 bzw.38 nach einem vorgebbaren Toleranzweg zugelassen.

Parallel zum Arbeitszylinder 4 des ersten Einzelrades 7 eines Radpaares wird der in FIG 3 nicht dargestellte Arbeitszylinder des zweiten Einzelrades angeschlossen (hydraulische Spurstange symbolisiert durch die Pfeile 18 und 19). Dadurch wird das zweite Einzelrad ebenfalls in die tangentiale Lage des ersten Einzelrades 7 mitgestellt.

Bei der erfindungsgemäßen Einzelrad-Steuervorrichtung kann durch zusätzliche Einrichtungen ein mittlerer Stellwinkelausgleich erreicht werden, der den Radiusunterschied zwischen den außen- und innenliegenden Schienen eines Gleises berücksichtigt.

Eine derartige in den FIG 1 bis 3 nicht dargestellte Einrichtung umfaßt eine Differenzdruckhydraulik, die über Druckrohrabgänge zwischen die Behälter 1 und 1' geschaltet ist, sowie eine Lenkwinkel-Korrekturvorrichtung mit einem Differentialregler. Der Differentialregler wirkt derart auf die Druckkreisläufe der Einzelrad-Steuervorrichtungen, daß jeweils das kurveninnere Einzelrad eines Radpaares in seinem Stellwinkel korrigiert wird.

Zur Korrektur des Stellwinkels des kurveninneren Einzelrades benötigter Differentialregler neben den fahrzeugspezifischen, im Rechner des Differentialreglers gespeicherten Festwerten (Radaufstandsspur, Radpaarabstand) den sich jeweils einstellenden Stellwinkel des anlaufenden, kurvenäußeren Einzelrades. Diesen Stellwinkel erhält der Differentialregler z.B. von einem Winkelschrittgeber des anlaufenden, kurvenäußeren Einzelrades.

Die Korrektur des Stellwinkels des kurveninneren Einzelrades um einen Nachstellwinkel ergibt den Lenkwinkel für das kurveninnere Einzelrad. Die Ermittlung des Lenkwinkels für das kurveninnere Einzelrad im Rechner des Differentialreglers ist in der europäischen Patentanmeldung 90114094.7 beschrieben.

Die Korrektur des Stellwinkels des kurveninneren Einzelrades erfolgt dann über die Verstellung des Angriffspunktes des Kopplungselementes 5 und/oder des Betätigungsgestänges 39,40 in der Kulisse des Wippenhebels 34. Die Verstellung des Angriffspunktes in der Kulisse des Wippenhebels 34 kann hydraulisch (unter Benutzung der Druckkreisläufe der Einzelrad-Steuervorrichtungen) oder elektrisch (beispielsweise mittels eines Schrittmotors mit Spindelantrieb) erfolgen.

## Patentansprüche

1. Einzelrad-Steuervorrichtung für wenigstens ein horizontal drehbewegliches Einzelrad eines Fahrzeuges, insbesondere Schienenfahrzeuges, mit einer diesem zugeordneten Richtungsvorgabe-Einrichtung die folgendes umfaßt:
a) Einen Strömungskanal für ein strömendes Medium,
b) einen im Strömungskanal in der Strömung schwenkbar angeordneten und mit dem Einzelrad (7,7') gekoppelten Strömungskörper (3,3') für die Übernahme der Strömungsrichtung zwecks Übertragung auf das Einzelrad (7,7'),
c) eine Einrichtung (8,9,21,23,81) zur Druck- und/oder Geschwindigkeitsänderung des strömenden Mediums, die aktiviert wird, wenn vom Einzelrad (7,7') auf den Strömungskörper (3,3') eine Richtungsänderungskraft ausgeübt wird, sowie
d) ein im Strömungskanal angeordnetes Strömungsrohr (2,2') für das strömende Medium, vor dessen Austritts-Öffnung der Strömungskörper (3,3') angeordnet ist.

2. Einzelrad-Steuervorrichtung nach Anspruch 1, wobei der Strömungskanal und der Strömungskörper (3,3') im Inneren eines geschlossenen Behälters (1,1') liegt.

3. Einzelrad-Steuervorrichtung nach Anspruch 1 oder 2, wobei der Strömungskörper als Strömungsteilerwippe (3,3') ausgebildet ist, die das aus dem Strömungsrohr (2,2') austretende Medium zwecks Übertragung der auf die Wippenarme (32,33) wirkenden hydrodynamischen Kräfte als richtungsgebende Differenzkraft auf das Einzelrad (7,7') aufteilt.

4. Einzelrad-Steuervorrichtung nach Anspruch 3, wobei die Strömungsteilerwippe (3) zwei schaufelförmige, einseitig offene Strahlumlenkkörper (32a,33a) oder zwei schaufelförmige Strahlumlenkrohre (32b,33b) aufweist, die zueinander und zur Drehachse (31) symmetrisch angeordnet sind und in denen die Aufteilung des aus dem Strömungsrohr (2) austretenden Mediums erfolgt.

5. Einzelrad-Steuervorrichtung nach einem der Ansprüche 1 bis 4, wobei der Strömungskörper (3) um eine vertikale Drehachse (31) horizontal schwenkbar angeordnet ist.

6. Einzelrad-Steuervorrichtung nach einem der Ansprüche 3 bis 5, wobei die Strömungsteilerwippe (3) einen aus dem Behälter (1) herausgeführten Wippenhebel (34) besitzt, der die Stellung der Strömungsteilerwippe (3) nach außen überträgt.

7. Einzelrad-Steuervorrichtung nach Anspruch 4, wobei die Richtungsvorgabe-Einrichtung als Freistrahlregler ausgebildet ist, bei dem das Medium gegen die schaufelförmigen, einseitig offenen Strahlumlenkkörper (32a,33a) der Strömungsteilerwippe (3) strahlt.

8. Einzelrad-Steuervorrichtung nach Anspruch 4 und 7, wobei während des Geradeaus-Laufs des Einzelrades (7) die schaufelförmigen Strahlumlenkkörper (32a,33a) mit ihren Eintrittsöffnungen der Austrittsöffnung des Strömungsrohres (2) gegenüberliegen.

9. Einzelrad-Steuervorrichtung nach einem der Ansprüche 1 bis 8, wobei die Strahldruckpotentiale an den Austrittsöffnungen der schaufelförmigen Strahlumlenkkörper (32a,33a) mit einer Einrichtung (4,5,6) zur Stabilisierung der Nullstellungslage der Strömungsteilerwippe (3) für die Geradeaus-Steuerung des Einzelrades (7) und mit der Einrichtung (8,9,21,81) zur Druck- und/oder Geschwindigkeitsänderung des strömenden Mediums verbunden sind.

10. Einzelrad-Steuervorrichtung nach einem der Ansprüche 1 bis 9, wobei die Einrichtung zur Druck- und/oder Geschwindigkeitsänderung des strömenden Mediums einen hydraulischen Arbeitszylinder (4) umfaßt, der über seine Kolbenstange (41) mit dem Lenkhebel (71) des Einzelrades (7) verbunden ist.

11. Einzelrad-Steuervorrichtung nach Anspruch 10, wobei der hydraulische Arbeitszylinder (4) über ein Kopplungselement (5), das vorzugsweise über eine Kulissenführung im Wippenhebel (34) geführt ist, mechanisch mit der Strömungsteilerwippe (3) verbunden ist.

12. Einzelrad-Steuervorrichtung nach Anspruch 4, wobei die Richtungsvorgabe-Einrichtung als Druckstrahlregler ausgebildet ist, bei dem das Strömungsrohr (2) druckdicht mit den schaufelförmigen Strahlumlenkrohren (32b,33b) der Strömungsteilerwippe (3) zusammenwirkt.

13. Einzelrad-Steuervorrichtung nach Anspruch 4 und 12, wobei das Strömungsrohr als Hosenrohr (2) ausgebildet ist, dessen beide Austrittsöffnungen bei Geradeaus-Lauf des Einzelrades (7) derart an beiden Eintrittsöffnungen des schaufelförmigen Strahlumlenkrohres (32b,33b) anliegen, daß die Strömungsteilerwippe (3) symmetrisch beaufschlagt wird.

14. Einzelrad-Steuervorrichtung nach Anspruch 13, wobei die Stellung der Strömungsteilerwippe (3) mit ihrem als Schieberventil ausgebildeten Übergang die auftretenden Differenzdrücke, die aus der Aufteilung des strömenden Mediums resultieren, derart verteilen, daß sie die Strömungsteilerwippe (3) entgegen ihrer Auslenkung im Sinne einer hydrodynamischen Nullstellung-Stabilisierung wieder in ihre Nullage zurückführen.

15. Einzelrad-Steuervorrichtung nach einem der Ansprüche 1 bis 14, wobei die Einrichtung zur Druck- und/oder Geschwindigkeitsänderung des strömenden Mediums ein im Strömungsrohr (2) angeordnetes Druckregelventil (23) umfaßt.

16. Einzelrad-Steuervorrichtung nach einem der Ansprüche 1 bis 15, wobei die Einrichtung zur Druck- und/oder Geschwindigkeitsänderung des strömenden Mediums einen Druck-Nebenschlußkreis (8) umfaßt, der ein mit der Strahlteilerwippe (3) gekoppeltes und in Abhängigkeit von deren Stellung aktivierbares Ventil (81) enthält.

17. Einzelrad-Steuervorrichtung nach einem der Ansprüche 1 bis 16, wobei jedem horizontal drehbeweglichen Einzelrad (7,7') eines Radpaares eine Richtungsvorgabe-Einrichtung zugeordnet ist, die derart zueinander hydraulisch parallel geschaltet sind, daß bei der Geradeaus-Stabilisierung keine gegenseitige Beeinflussung der Einzelräder (7,7') eines Radpaares auftritt und daß bei Kurvenfahrt der im Arbeitszylinder (4) des kurvenäußeren (anlaufenden) Einzelrades (7) auftretende Differenzdruck den Arbeitszylinder (4') des kurveninneren Einzelrades (7') zur Einstellung des entsprechenden Lenkwinkels zugeführt wird.

18. Einzelrad-Steuervorrichtung nach Anspruch 7,9 und 17, wobei ein regelbares Proportionalventil (12) zwischen die zueinander parallel geschalteten Arbeitszylinder (4,4') der Einzelräder (7,7') eines Radpaares geschaltet ist, durch das die Arbeitszylinder (4,4') mit einer Druckverstärkung aus einem Druck-Hauptkreis (11) beaufschlagbar sind, die proportional zu den Staudrücken an den Austrittsöffnungen der schaufelförmigen Strahlumlenkörper der Strömungsteilerwippen (3,3') ist.

19. Einzelrad-Steuervorrichtung nach Anspruch 15 und 18, wobei der Druck-Hauptkreis (11) über ein Druckminderventil (13) an den Druckkreislauf der Richtungsvorgabe-Einrichtungen der Einzelräder (7,7') eines Radpaares schaltbar ist.

20. Einzelrad-Steuervorrichtung nach Anspruch 10,13 und 17, wobei die Einrichtung zur Druck- und/oder Geschwindigkeitsänderung des strömenden Mediums ferner zwei Wegeventile (37,38) umfaßt, die nur in Auslenkrichtung der Strahlteilerwippe (3) betätigbar sind und die mit den Austrittsöffnungen der schaufelförmigen Strahlumlenkrohre (32b,33b) sowie über jeweils eine Rückführleitung (16,17) mit dem Behälter (1) derart verbunden sind, daß durch das in den schaufelförmigen Strahlumlenkrohren (32b,33b) der Strömungsteilerwippe (3) aufgeteilte, strömende Medium eine Umlaufströmung erzeugt wird, die bezogen auf den Wippendrehpunkt in den schaufelförmigen Strahlumlenkrohren (32b,33b) gegeneinander gerichtete Momente erzeugt.

21. Einzelrad-Steuervorrichtung nach Anspruch 20, wobei die Strömungsteilerwippe (3) als Drehschieberventil ausgebildet ist.

22. Einzelrad-Steuervorrichtung nach Anspruch 20 oder 21, wobei die Eintrittsöffnungen der schaufelförmigen Strahlumlenkrohre (32b,33b) derart ausgebildet sind, daß bei ausgelenkter Wippenstellung der von den Austrittsöffnungen des Hosenrohres (2) vorgegebene Durchflußquerschnitt auf der ausgelenkten Seite erhalten bleibt.

23. Einzelrad-Steuervorrichtung nach einem der Ansprüche 20 bis 22, wobei die an dem kurvenäußeren Einzelrad (7) bei Einfahrt in eine Gleiskurve auftretenden Anlaufkräfte über das Verbindungsgestänge (6) auf den Arbeitszylinder (4) und über Kopplungselemente (5) auf den Wippenhebel (34) übertragen werden sowie das in Richtung der Anlaufkräfte wirkende Wegeventil (38) schließt und gleichzeitig für die Erzeugung einer Gegenkraft zu den Anlaufkräften die Druckleitungen zu den Arbeitszylindern (4) öffnen, und wobei während der Kurvenfahrt durch die Verlagerung der Umlaufströmung über den für die Geradeaus-Stabilisierung vorgegebenen Freilauf der Teleskopführungen (41,42) der Betätigungsgestänge (39,40) hinaus auf die jeweils ausgelenkte Seite der Strömungsteilerwippe (3) die Rückstellmomente derart asymmetrisch veränderbar sind, daß in dieser Position die Geradeaus-Stabilisierung des Einzelrades (7) unwirksam ist, und nach Ausfahrt aus der Gleiskurve wieder die Geradeaus-Stabilisierung des Einzelrades (7) erfolgt.

24. Einzelrad-Steuervorrichtung nach einem der Ansprüche 1 bis 23, wobei die Geschwindigkeit des strömenden Mediums in Abhängigkeit von der Drehzahl des Einzelrades (7,7') mittels der Einrichtung (21,23) zur Druck- und/oder Geschwindigkeitsänderung des strömenden Mediums regelbar ist.

## Claims

1. A single wheel-control device for at least a horizontally rotatably movable single wheel of a vehicle, in particular of a rail vehicle, with a direction selecting device allocated to this, comprising the following:
a) a flow channel for a flowing medium,
b) a flow body (3,3'), pivotally arranged in the flow channel in the flow and coupled to the single wheel (7,7'), for accepting the flow direction for the purpose of transfer to the single wheel (7,7'),
c) a device (8,9,21,23,81) for changing the pressure and/or speed of the flowing medium, which is activated when a force is applied to the flow body (3,3'), by a change in direction from the single wheel (7,7') and
d) a flow tube (2,2') arranged in the flow channel for the flowing medium, in front of whose outlet opening is arranged the flow body (3,3').

2. A single wheel-control device according to claim 1, wherein the flow channel and the flow body (3,3') lie in the interior of a closed container (1,1').

3. A single wheel-control device according to claim 1 or 2, wherein the flow body is formed as flow divider rocker (3,3'), which divides the medium exiting from the flow tube (2,2') for the purpose of transferring the hydrodynamic forces, acting on the rocker arms (32,33), as direction-giving differential force onto the single wheel (7,7').

4. A single wheel-control device according to claim 3, wherein the flow divider rocker (3) has two blade-shaped jet deflection bodies (32a,33a) open on one side or two blade-shaped jet deflection tubes (32b, 33b), which are arranged symmetrically relative to each other and relative to the axis of rotation (31) and in which the division of the medium exiting from the flow tube (2) occurs.

5. A single wheel-control device according to one of claims 1 to 4, wherein the flow body (3) is arranged so as to pivot horizontally about a vertical axis of rotation (31).

6. A single wheel-control device according to one of claims 3 to 5, wherein the flow divider rocker (3) has a rocker lever (34) led out of the container (1), which transfers the position of the flow divider rocker (3) outwards.

7. A single wheel-control device according to claim 4, wherein the direction selecting device is formed as an open jet controller, in which the medium is blasted against the blade-shaped jet deflection bodies (32a, 33a) of the flow divider rocker (3), said bodies being open on one side.

8. A single wheel-control device according to claim 4 and 7, wherein when the single wheel (7) has a straight run the inlet openings of the blade-shaped jet deflection bodies (32a, 33a) face the outlet opening of the flow tube (2).

9. A single wheel-control device according to one of claims 1 to 8, wherein the jet pressure potentials at the outlet openings of the blade-shaped jet deflection bodies (32a,33a) are connected to a device (4,5,6) for stabilizing the neutral position of the flow divider rocker (3) for "straight" control of the single wheel (7) and to the device (8,9,21,81) for changing the pressure and/or speed of the flowing medium.

10. A single wheel-control device according to one of claims 1 to 9, wherein the device for changing the pressure and/or speed of the flowing medium comprises a hydraulic working cylinder (4), which is connected by way of its piston rod (41) to the deflecting lever (71) of the single wheel (7).

11. A single wheel-control device according to claim 10, wherein the hydraulic working cylinder (4) is connected mechanically to the flow divider rocker (3) by way of a coupling element (5), which is guided preferably by way of a rocker guide in the rocker lever (34).

12. A single wheel-control device according to claim 4, wherein the direction selecting device is formed as pressure jet controller, in which the flow tube (2) cooperates in a pressure-tight manner with the blade-shaped jet deflecting tubes (32b, 33b) of the flow divider rocker (3).

13. A single wheel-control device according to claim 4 and 12, wherein the flow tube is formed as a forked pipe (2), the two outlet openings of which rest on the two inlet openings of the blade-shaped jet deflection tube (32b, 33b) when the single wheel (7) has a straight run, so that the flow divider rocker (3) is acted upon symmetrically.

14. A single wheel-control device according to claim 13, wherein the position of the flow divider rocker (3) with its junction, formed as sliding valve, distribute the differential pressures occurring, which result from the division of the flowing medium, such that they guide the flow divider rocker (3), against its displacement, back again into its neutral position, in the sense of a hydrodynamic neutral position stabilization.

15. A single wheel-control device according to one of claims 1 to 14, wherein the device for changing the pressure and/or speed of the flowing medium comprises a pressure control valve (23) arranged in the flow tube (2).

16. A single wheel-control device according to one of claims 1 to 15, wherein the device for changing the pressure and/or speed of the flowing medium comprises a pressure shunt circuit (8), which contains a valve (81) coupled to the jet divider rocker (3) and able to be activated in dependence on the position thereof.

17. A single wheel-control device according to one of claims 1 to 16, wherein allocated to each horizontally rotatably movable single wheel (7,7') of a pair of wheels there is a direction selecting device, which are connected hydraulically and parallel relative to each other, such that when there is straight ahead stabilization no mutual influence of the single wheels (7,7') of a pair of wheels occurs and in that, when there is travel around bends, the differential pressure occurring in the working cylinder (4) of the outer turning (starting) single wheel (7) is supplied to the working cylinder (4') of the inner turning single wheel (7') for setting the corresponding steering angle.

18. A single wheel-control device according to claim 7,9 and 17, wherein a controllable proportional valve (12) is connected between the working cylinders (4,4') of the single wheels (7,7') of a pair of wheels, connected in parallel relative to each other, through which the working cylinders (4,4') are able to be acted upon with a pressure amplification from a pressure main circuit (11), which is proportional to the impact pressures at the outlet openings of the blade-shaped jet deflection bodies of the flow divider rockers (3,3').

19. A single wheel-control device according to claim 15 and 18, wherein the pressure main circuit (11) is able to be connected by way of a pressure reducing valve (13) to the pressure circuit of the direction selecting devices of the single wheels (7,7') of a pair of wheels.

20. A single wheel-control device according to claim 10,13 and 17, wherein the device for changing pressure and/or speed of the flowing medium comprises furthermore two directional control valves (37,38) which are only able to be activated in the deflection direction of the jet divider rocker (3), and which are connected to the outlet openings of the blade-shaped jet deflection tubes (32b,33b) and to the container (1) in each case by way of a feedback line (16,17) so that through the flowing medium, divided into the blade-shaped jet deflection tubes (32b,33b) of the flow divider rocker (3), a circulating flow is generated, which, relative to the rocker point of rotation in the blade-shaped jet deflection tubes (32b,33b), generates moments directed against each other.

21. A single wheel-control device according to claim 20, wherein the flow divider rocker (3) is formed as a rotary sliding valve.

22. A single wheel-control device according to claim 20 or 21, wherein the inlet openings of the blade-shaped jet deflection tubes (32b,33b) are formed so that when the rocker position is deflected the throughflow cross-section predetermined by the outlet openings of the forked tube (2) is maintained on the deflected side.

23. A single wheel-control device according to one of claims 20 to 22, wherein the starting forces occurring on the outer turning single wheel (7) when entering a curve in the track are transferred by way of the connecting rod (6) onto the working cylinder (4) and by way of the coupling elements (5) onto the rocker lever (34), and the directional control valve (38) acting in the direction of the starting forces closes and at the same time in order to generate a counter force to the starting forces, the pressure lines to the working cylinders (4) open, and wherein during travel around bends, through the displacement of the circulating flow, over and beyond the free running of the telescopic guides (41,42) of the activating rod (39,40), specified for the straight ahead stabilization, onto the respective deflected side of the flow divider rocker (3), the restoring torques are able to be altered asymmetrically so that in this position the straight ahead stabilization of the single wheel (7) is ineffective, and after exiting a curve in the track, the straight ahead stabilization of the single wheel (7) occurs again.

24. A single wheel-control device according to one of claims 1 to 23, wherein the speed of the flowing medium, in dependence on the rotational speed of the single wheel (7,7'), is able to be controlled by means of the device (21,32) for changing the pressure and/or speed of the flowing medium.

## Revendications

1. Dispositif de commande d'au moins une roue indépendante et mobile horizontalement en rotation, d'un véhicule, notamment d'un véhicule sur rails, comportant un dispositif de prescription de direction associé à ce véhicule, et qui comprend ce qui suit :
a) un canal d'écoulement pour un fluide en écoulement,
b) un corps d'écoulement (3,3') monté de manière à pouvoir basculer dans l'écoulement à l'intérieur du canal d'écoulement et accouplé à la roue indépendante (7,7'), pour la prise en charge de la direction d'écoulement en vue d'une transmission à la roue indépendante (7,7'),
c) un dispositif (8,9,21,23,81) destiné à modifier la pression et/ou la vitesse du fluide en écoulement, et qui entre en action lorsqu'une force de changement de direction est appliquée par la roue indépendante (7,7') au canal d'écoulement (3,3'), ainsi que
d) un tube d'écoulement (2,2') du fluide en écoulement, qui est disposé dans le canal d'écoulement et devant l'ouverture de sortie duquel est disposé le corps d'écoulement (3,3').

2. Dispositif de commande de roue indépendante suivant la revendication 1, dans lequel le canal d'écoulement et le corps d'écoulement (3,3') sont à l'intérieur d'un récipient (1,1') fermé.

3. Dispositif de commande de roue indépendante suivant la revendication 1 ou 2, dans lequel le corps d'écoulement est sous la forme d'une bascule de division de l'écoulement (3,3'), qui répartit le fluide, qui sort du tube d'écoulement (2,2'), pour la transmission des forces hydrodynamiques, qui agissent sur les bras (32,33) de la bascule, en tant que force différentielle prescrivant la direction, à la roue indépendante (7,7').

4. Dispositif de commande de roue indépendante suivant la revendication 3, dans lequel la bascule (3) de division de l'écoulement comporte deux corps (32a, 33a) de déviation du jet, sous forme d'aubes et ouverts d'un côté, ou deux tubes (32b,33b) de déviation du jet, en forme d'aubes, qui sont disposés symétriquement l'un par rapport à l'autre et par rapport à l'axe de rotation (31) et dans lesquels s'effectue la division du fluide qui sort du tube d'écoulement (2).

5. Dispositif de commande de roue indépendante suivant l'une des revendicatiors 1 à 4, dans lequel le corps d'écoulement (3) est disposé de manière à pouvoir tourner horizontalement par rapport à un axe de rotation vertical (31).

6. Dispositif de commande de roue indépendante suivant l'une des revendications 3 à 5, dans lequel la bascule (3) de division de l'écoulement possède un levier (34), qui sort du récipient (1) et qui transmet à l'extérieur la position de la bascule (3) de division de l'écoulement.

7. Dispositif de commande de roue indépendante suivant la revendication 4, dans lequel le dispositif de prescription de la direction est sous la forme d'un régulateur à jet libre, dans lequel le fluide est projeté sur les corps (32a,33a) en forme d'aubes de déviation du jet de la bascule (3) de division de l'écoulement qui sont ouverts d'un côté.

8. Dispositif de commande de roue indépendante suivant les revendications 4 et 7, dans lequel, pendant le déplacement en ligne droite de la roue indépendante (7), les ouvertures d'entrée des corps en forme d'aubes (32a,33a) de déviation du jet sont disposées en vis-à-vis de l'ouverture de sortie du tube d'écoulement (2).

9. Dispositif de commande de roue indépendante suivant l'une des revendications 1 à 8, dans lequel les potentiels de la pression de jet au niveau des ouvertures de sortie des corps (32a, 33a) en forme d'aubes de déviation de jet sont reliés à un dispositif (4,5,6) destiné à stabiliser la position du zéro de la bascule (3) de division de l'écoulement pour la commande en déplacement rectiligne de la roue indépendante (7), et au dispositif (8,9,21,81) destiné modifier la pression et/ou la vitesse du fluide en écoulement.

10. Dispositif de commande de roue indépendante suivant l'une des revendications 1 à 9, dans lequel le dispositif destiné à modifier la pression et/ou la vitesse du fluide en écoulement comprend un vérin (4) de travail hydraulique, qui est relié par l'intermédiaire de sa tige de piston (41) au levier de commande (61) de la roue indépendante (7).

11. Dispositif de commande de roue indépendante suivant la revendication 10, dans lequel le vérin (4) de travail hydraulique est relié mécaniquement à la bascule (3) de division de l'écoulement par l'intermédiaire d'un élément d'accouplement (5), qui est guidé de préférence par l'intermédiaire d'un guide de coulisse dans le levier (34) de la bascule.

12. Dispositif de commande de roue indépendante suivant la revendication 4, dans lequel le dispositif de prescription de la direction est agencé sous la forme d'un régulateur du jet sous pression, dans lequel le tube d'écoulement (2) coopère, d'une manière étanche à la pression, avec les tubes en forme d'aubes (32b,33b) de déviation du jet de la bascule (3) de division de l'écoulement.

13. Dispositif de commande de roue indépendante suivant les revendications 4 et 12, dans lequel le tube d'écoulement est sous la forme d'un tube à bifurcation (2), dont les deux ouvertures de sortie s'appliquent, dans le cas d'un déplacement rectiligne de la roue indépendante (7), sur les deux ouvertures d'entrée du tube (32b,33b) en forme d'aube de déviation du jet de sorte que la bascule (3) de division de l'écoulement est chargée d'une manière symétrique.

14. Dispositif de commande de roue indépendante suivant la revendication 13, dans lequel la position de la bascule (3) de division de l'écoulement répartit, au moyen de sa jonction en forme de vanne à tiroir, les pressions différentielles qui apparaissent et qui provient de la division du fluide en écoulement de telle sorte que les pressions différentieles ramènent la bascule (3) de division de l'écoulement dans sa position initiale, à l'encontre de sa déviation, en vue d'une stabilisation hydrodynamique de la position de zéro.

15. Dispositif de commande de roue indépendante suivant l'une des revendications 1 à 14, dans lequel le dispositif destiné à modifier la pression et/ou la vitesse du fluide en écoulement comprend une vanne de régulation de pression (23) disposée dans le tube d'écoulement (2).

16. Dispositif de commande de roue indépendante suivant l'une des revendications 1 à 15, dans lequel le dispositif destiné à modifier la pression et/ou la vitesse du fluide en écoulement comprend un circuit de dérivation de pression (8) à vanne (81), qui est accouplée à la bascule (3) de division de l'écoulement et qui peut être mise en action en fonction de la position de la bascule.

17. Dispositif de commande de roue indépendante suivant l'une des revendications 1 à 16, dans lequel aux roues indépendantes (7,7') mobiles en rotation horizontalement d'un couple de roues sont associés des dispositifs respectifs de prescription de direction, qui sont branchés hydrauliquement en parallèle de telle sorte que, lors de la stabilisation du déplacement en ligne droite, il n'apparaisse pas d'influence réciproque des roues indépendantes (7,7') d'un couple de roues et que, dans le cas d'un déplacement suivant une courbe, la pression différentielle, qui apparaît dans le vérin (4) de travail de la roue indépendante (7) à l'extérieur de la courbe (qui accélère) est envoyée au vérin (4') de travail de la roue indépendante (7'), à l'intérieur de la courbe, pour le réglage de l'angle de braquage correspondant.

18. Dispositif de commande de roue indépendante suivant les revendications 7, 9 et 17, dans lequel une vanne (12) réglable à (4') action proportionnelle est branchée entre les vérins (4,4') de travail en parallèle des roues indépendantes (7',7') d'un couple de roues, et peut charger les vérins de travail (4',4') à partir d'un circuit principal (11) de production de la pression, avec un accroissement de pression qui est proportionnel aux pressions dynamiques présentes aux ouvertures de sortie des corps en forme d'aubes de renvoi de l'écoulement des bascules (3,3') de division de l'écoulement.

19. Dispositif de commande de roue indépendante suivant la revendication 15 ou 18, dans lequel le circuit principal (11) de production de la pression peut communiquer, par l'intermédiaire d'un détendeur (13), au circuit de pression des dispositifs de prescription de direction des roues indépendantes (7,7') d'un couple de roues.

20. Dispositif de commande de roue indépendante suivant la revendication 10, 13 ou 17, dans lequel le dispositif destiné à modifier la pression et/ou la vitesse du fluide en écoulement comprend en outre deux vannes de distribution (37,38), qui peuvent être actionnées uniquement dans le sens de déviation de la bascule (3) de division de l'écoulement et qui communiquent avec les ouvertures de sortie des tubes (32b,33b) en forme d'aubes de déviation du jet ainsi que, par l'intermédiaire de canalisations de renvoi respectives (16,17), avec le récipient (1), de sorte que le fluide en écoulement, qui est réparti entre les tubes (32b,33b) en forme d'aubes de déviation du jet de la bascule (3) de division de l'écoulement, produit un écoulement rotatif, qui produit, par rapport au centre de rotation de la bascule, des couples dirigés en sens inverse dans les tubes (32b,33b) en forme d'aubes de déviation du jet.

21. Dispositif de commande de roue indépendante suivant la revendication 20, dans lequel la bascule (3) de division de l'écoulement est agencée sous la forme d'une vanne à tiroir rotatif.

22. Dispositif de commande de roue indépendante suivant la revendication 20 ou 21, dans lequel les ouvertures d'entrée des tubes (32b,33b) en forme d'aubes de déviation du jet sont telles que, lorsque la bascule est dans la position déviée, la section transversale de passage, qui est prescrite par les ouvertures de sortie du tube à bifurcation (2), reste conservée du côté dévié.

23. Dispositif de commande de roue indépendante suivant l'une des revendications 20 à 22, dans lequel les forces d'accélération, qui apparaissent sur la roue indépendante (7) à l'extérieur de la courbe dans le cas d'un déplacement suivant une courbe de la voie, sont transmises, par l'intermédiaire de la tringlerie de liaison (6), au vérin (4) de travail et, par l'intermédiaire d'éléments d'accouplement (5), au levier (34) de la bascule, et la vanne de distribution (38), qui agit en direction des forces d'accélération, se ferme et simultanément les canalisations de pression aboutissant aux vérins (4) de travail s'ouvrent pour la production d'une force s'opposant aux forces d'accélération, et dans lequel, pendant le mouvement suivant une courbe, par le transfert de l'écoulement rotatif au-delà de la course libre, prescrite pour la stabilisation du déplacement en ligne droite des guides télescopiques (41,42) des tringleries d'actionnement (39,40), au côté de la bascule (3) de division de l'écoulement, dans lequel s'effectue la déviation, les couples de rappel peuvent être modifiés de façon dissymétrique de sorte que, dans cette position, la stabilisation en ligne droite de la roue indépendante (7) est inopérante et qu'une fois la courbe de la voie franchie, la stabilisation en ligne droite de la roue indépendante (7) a lieu à nouveau.

24. Dispositif de commande de roue indépendante suivant l'une des revendications 1 à 12, dans lequel la vitesse du fluide en écoulement peut être réglée en fonction de la vitesse de rotation de la roue indépendante (7,7') au moyen du dispositif (21,23) destiné à modifier la pression et/ou la vitesse du fluide en écoulement.
